# EUROPEAN PATENT APPLICATION

(11) **EP 4 675 377 A1**
(43) Date of publication of application: **07.01.2026**
(21) Application number: 24186800.9
(22) Date of filing: 05.07.2024
(51) Int. Cl.: G05B 19/042, G05B 23/02

(54) **METHOD AND SYSTEM FOR SUPPORTING COMMISSIONING AND/OR MAINTENANCE OF A BUILDING AUTOMATION DEVICE**

(71) Applicant: Siemens Schweiz AG, 8047 Zürich (CH)
(72) Inventor: Gülderen, Özgür, 6300 Zug (CH); Kremer, Maximilian, 8800 Thalwil (CH)
(74) Representative: Siemens Patent Attorneys

(57) **Abstract**

A method for supporting commissioning and/or maintenance of a building automation system (100) and/or a building automation device (5), the method comprising the steps of:
a) receiving (81) real-time data (2) about a real-world infrastructure environment (3) from a sensor arrangement (4), said real-world infrastructure environment (3) comprising at least one building automation device (5) arranged in an infrastructure, wherein said building automation device (5) comprises a code (6);
b) analyzing (82) the real-time data (2) to identify and localize said code (6) within the real-world infrastructure environment (3);
c) generating (83) virtual content (7) based on the identified code (6), said virtual content (7) comprising support information (71) for commissioning and/or maintaining the building automation device (5);
d) presenting (84) the virtual content (7) to an operator.

## Description

The present invention relates to the technical field of supporting of commissioning and maintenance of a building automation systems and building automation devices.

There still exist inefficiencies and potential errors in the commissioning process of building automation systems. Specifically, the traditional methods are not as efficient as they could be in retrieving real-time information about controllers and their functionalities, leading to time-consuming troubleshooting and potential wiring errors during commissioning. One challenge is the unavailability of precise and reliable optical detection of objects and/or devices (e.g. of controllers for building automation), especially for usage in the context of augmented reality.

Current approaches are often lacking precision and therefore reliability in real-world scenarios and hinder the meaningful usage of augmented reality in this field, which would have several benefits and could contribute to resolving the inefficiencies and potential errors in the commissioning process.

In the context of augmented reality, objects and/or devices may be detected by multiple methods. Most common are:
Detection using given images prepared beforehand which are then compared to camera image; this can be done either by the object itself or by an image with special visual features serving as so-called marker. The detection uses three-dimensional models (which are then compared to a three-dimensional surrounding, usually by specialized hardware) or to a position and direction (for stationary objects with lower precision requirements; for example with GPS and compass).

Engineering/Commissioning applications for building automation controllers do not yet use augmented reality and instead focus on a more traditional approach, where the user can connect to the controller and configure it but can't use an augmented camera feed to inspect and/or engineer the controller in front of the smartphone/tablet camera. This traditional approach also involves relying on manual reference to documentation and separate diagnostic tools, making it more time-consuming and prone to errors when compared to the new augmented reality based new approach.

Links to some augmented reality solutions available on market:
https://www.ptc.com/de/products/vuforia/vuforia-engine/ar-app-development
https://developer.apple.com/documentation/arkit/content ancho rs
https://developers.google.com/ar/develop/fundamentals?hl=en

Links to building automation controller engineering applications of competitors:
https://www.se.com/ww/en/product-subcategory/5440-engineering-tools/
https://new.abb.com/low-voltage/products/building-automation/service-and-tools/engineering-tools
https://www.johnsoncontrols.com/building-automation-and-controls/building-automation-systems

Theoretical information about approaches to augmented reality:
https://doi.org/10.1007/978-3-642-14179-9

It is therefore the objective to support a human operator in the commissioning and/or maintenance of a building automation system and/or a building automation device. This objective is achieved by the solutions presented in the independent claims. More specific embodiments are presented in an exemplary manner in the dependent claims, in the figures, and in the description.

Proposed is a method for supporting commissioning and/or maintenance of a building automation system and/or a building automation device. The method comprises a method step a) of receiving real-time data about a real-world infrastructure environment from a sensor arrangement. The real-world infrastructure environment comprises at least one building automation device arranged in an infrastructure. The building automation device comprises a code. In a method step b) the real-time data is analyzed to identify and localize said code within the real-world infrastructure environment. In a method step c) virtual content based on the identified code is generated. Said virtual content comprises support information for commissioning and/or maintaining the building automation system and/or a building automation device. In a method step d) the virtual content is presented to an operator.

This allows for the usage of augmented reality to simplify engineering and/or commissioning for specialized devices like the given controllers or other devices of a building automation system. Additional information specific to the specialized device can be presented to the operator for commissioning and/or engineering.

According to an embodiment, the method comprises a further method step e) of tracking the position of the building automation device in the received real-time data, a method step f) of integrating the virtual content with the real-time data based on the tracked position of the building automation device, and a method step g) of presenting the integrated virtual content on a display device to create an augmented reality experience. This allows for a real-time augmented reality experience in a video stream. For example, the display device can be a display device of a mobile device of an operator.

According to an embodiment the method further comprises a method step h) of receiving user inputs to interact with the virtual content and/or to control the augmented reality experience. This allows the user to select specific information in order to efficiently commission or maintain the building automation device.

According to an embodiment the method further comprises the method step k) of continuously updating the virtual content and the augmented reality experience based on changes in the real-world infrastructure environment and user inputs. This allows to indicate to the operator that an action he has taken to commission the building automation device was successful and/or to provide him with further augmented reality information for so he can more efficiently perform one or more follow-up steps.

According to an embodiment the real-time data comprises visual information of the real-world infrastructure environment, and the sensor arrangement comprises a camera system for generating said visual information. In addition or alternatively, the sensor system can comprise other systems suited to detect the code and/or the position and orientation of the building automation device relative to the sensor system.

According to an embodiment the code is an optically readable code arranged on a surface of the building automation device. For example, the code is a data matrix code (DMC) code, a quick response code (QR) or a barcode. Such codes allow for a particularly reliable and efficient detection of the code and thus of the building automation device. In addition, further information related to the device can be contained in the code, which is then decoded, for example the type of the building automation device. Preferably said code is detected within the visual information.

According to an embodiment the code is positioned on a predetermined position on or relative to the building automation device, wherein that predetermined position is used for generating and/or presenting the virtual content. This allows to detect the position and the orientation of the building automation device efficiently and reliably, and thus allows to overlay the virtual content efficiently and reliably with the real-time data, e.g. with a video stream which is presented on the display.

According to an embodiment other known characteristics than the code of the building automation device is recognized in the received real-time data and are used for identifying the code. For example, the shape and/or a label or trademark sign on the device can be used to further enhance reliability when determining the position and orientation of the device.

According to an embodiment, based on a known position of the code and/or other known characteristics of the building automation device, it is determined where to place the virtual content with the real-time data about the real-world infrastructure environment.

According to an embodiment, a mobile device receives the real-time data about a real-world infrastructure environment and presents the virtual content to the operator.

According to an embodiment, helper functions are incorporated into the virtual content. For example, helper functions can access data related to the building automation device in order to detect wiring error and/or PLC port status. This enables commissioning and maintenance engineers to quickly identify and resolve issues during the commissioning process.

According to an embodiment, the real-time data is preprocessed, for example in order to compensate for the skewing of the code due to an oblique perspective onto the code or to counteract difficult lighting conditions.

According to an embodiment, the virtual content and the support information for commissioning and/or maintaining the building automation system and/or a building automation device is generated and presented to the operator in real-time. This allows to support the human operator particularly efficiently in the commissioning and/or maintenance of the building automation system and/or the building automation device.

According to another aspect, an assistance system for supporting commissioning and/or maintenance of a building automation system and/or a building automation device is proposed. The assistance system comprises means for carrying out the proposed method.

According to another aspect, an assistance system for supporting commissioning and/or maintenance of a building automation system and/or a building automation device is proposed. The assistance system comprises a data processing system, a sensor arrangement, and a display device. The sensor arrangement is configured for generating real-time data about a real-world infrastructure environment. The data processing system is configured for analyzing said real-time data to identify and localize a code associated with a building automation device within the real-world infrastructure environment. The data processing system is further configured for visualizing onto the display device virtual content based on the identified code, said virtual content comprising support information for commissioning and/or maintaining the building automation system.

According to an embodiment, the data processing system is configured for tracking the position of the building automation device in the received real-time data. The data processing system is further configured for integrating the virtual content with the real-time data about the real-world infrastructure environment based on the tracked position of the building automation device. The data processing system is further configured for causing the display device to present the integrated virtual content on the display device to create an augmented reality experience.

All explanations given with regard to the method are fully applicable to the assistance systems.

Various features will become apparent to those skilled in the art from the following detailed description of the disclosed non-limiting embodiments. The drawings that accompany the detailed description can be briefly described as follows:
FIG. 1 shows a perspective view of a real-world infrastructure environment illustrating an assistance system for supporting commissioning and/or maintenance of a building automation system according to an embodiment of the invention;
FIG. 2 shows a schematic view of the real-world infrastructure environment of FIG. 1;
FIG. 3 shows a flow diagram for a method for supporting commissioning and/or maintenance of a building automation system according to an embodiment of the invention;
FIG. 4 shows a flow diagram for a method for supporting commissioning and/or maintenance of a building automation system according to an embodiment of the invention.

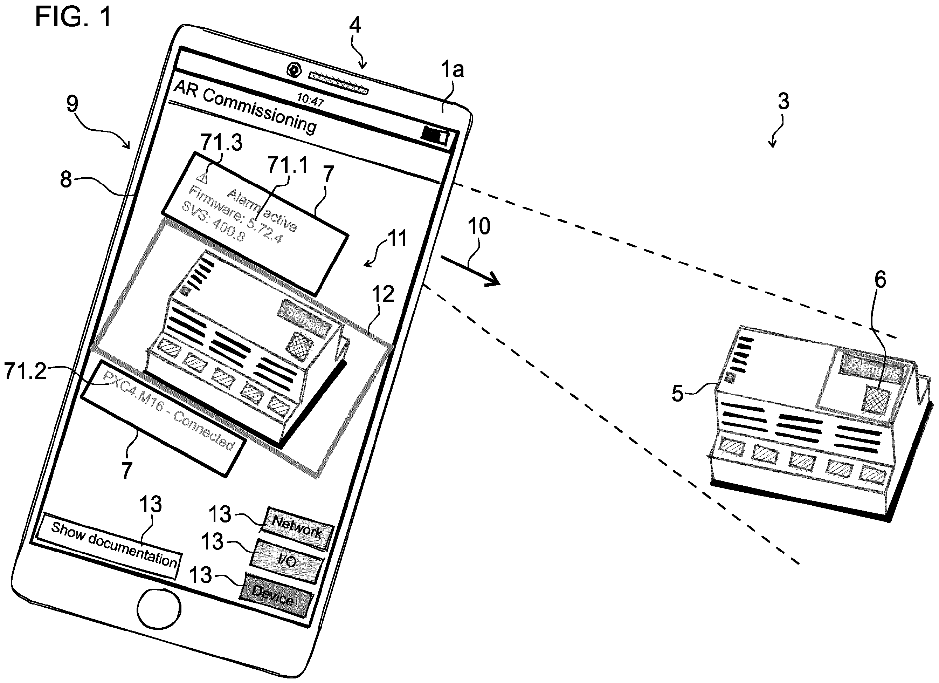

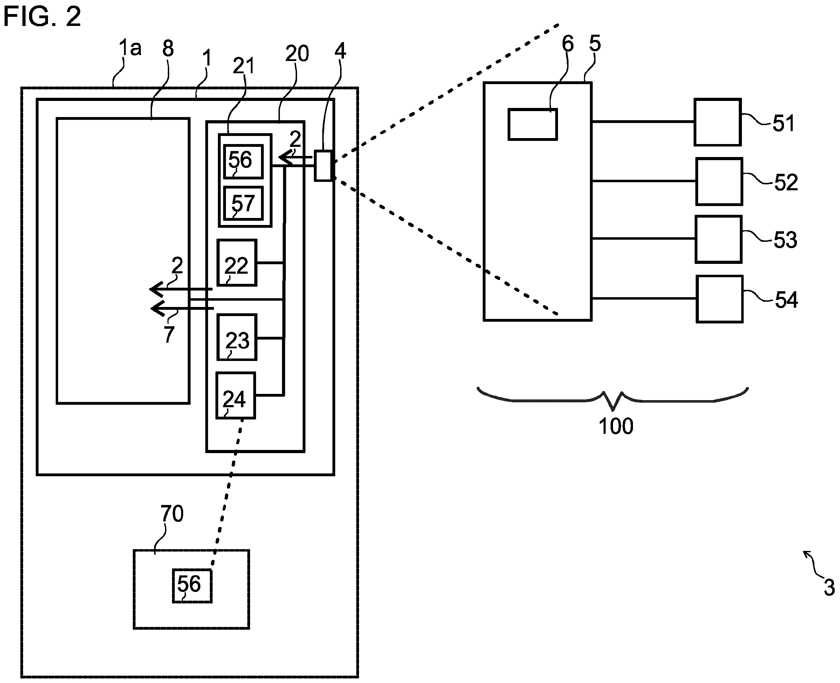

FIG. 1 and Fig. 2 show a real-world infrastructure environment 3. A building automation device 5 that is part of a building automation system 100 is arranged in the real-world infrastructure environment 3. In the embodiment shown, the building automation device 5 is a controller for controlling subsystems and/or other devices of the building automation system 100. The controller 5 comprises on at least one of its surfaces a Data Matrix code 6 (DMC). Subsystems can for example be heating ventilation air conditioning systems (HVAC) 51, lighting systems 52, surveillance systems 53, or fire safety systems 54. In order to commission and/or maintain the automation device 5, an assistance system 1 is presented. In this embodiment, the assistance system 1 is comprised by a mobile device 1a. In another embodiment, the mobile device 1a itself is an assistant device. The mobile device 1a is preferably a handheld device, such as a mobile phone or a tablet computer. In other embodiments, other mobile devices 1a such as a laptop computer or a personal computer can be used as the mobile device 1a.

The mobile device 1a comprises data processing system 20, a sensor arrangement 4, and a display device 8. The sensor arrangement 4 is implemented as camera system. The camera system comprises one or more cameras. As can be seen in FIG. 2, the data processing system 20 comprises a data memory 21, a processor 22, an input device 23, and a wireless interface 24. The data memory 21 comprises a database 56 comprising information about a plurality of different types of building automation devices and/or building automation subsystems 51, 52, 53, 54 and/or the building automation system 100. The data memory 21 further comprises instructions that when executed on the processor 22 causes the mobile device 1a to support commissioning and/or maintenance of a building automation system 100 and/or a building automation device as explained in further detail in the following.

The camera system 4 is configured for generating real-time data 2 in the form of a video stream about the real-world infrastructure environment 3. The data processing system 20 is configured for receiving and analyzing said real-time data 2 to identify and localize the DMC 6 associated with the building automation device 5. The data processing system 20 is further configured for decoding the DMC 6 and to retrieve in the database 56 device information related to the building automation device 5, such as its type, identification, shape, configuration information, connections. The data processing system 20 is further configured for generating virtual content 7 comprising support information for commissioning and/or maintaining the building automation system 100, and to cause the display device 8 to visualize said virtual content 7.

The data processing system 20 is further configured for tracking the position 9 and orientation 10 of the sensor arrangement 4 relative to building automation device 5 by tracking the position 9 and the orientation 10 of the DMC 6 in the video stream 2. The data processing system 20 is further configured for integrating the virtual content 7 with the real-time data 2 about the real-world infrastructure environment 3 depending on the tracked position 9 and orientation 10 of the DMC in the video stream, and for causing the display device 8 to present the integrated virtual content 7 to create an augmented reality experience 11.

In FIG 1, this can for example be seen by the integration of virtual content 7 in the form of textual information relative to the position 9 and orientation 10 of the DMC 6, thus relative to the position 9 and orientation 10 of the building automation device 5. For example, a firmware version 71.1 or a connections status 71.2 of the building automation device 5 or a component of the building automation device 5 can be indicated. Instead, or in addition to textual information 71.1, 71.2, the virtual content 7 can also comprise other information, such as symbols or graphical information, like an alert symbol 71.3 or indications where to connect which kind of wires. The virtual content 7 can be statically positioned on the display 8 and/or can be statical with regard to a position and/or orientation of the real-world environment or a component of the building automation device 5 displayed in the video stream. The latter is particularly useful for guiding the user, where on the building automation device 5 a particular function needs to be done or where on the building automation device 5 there is an error.

As shown in FIG. 1, the textual information can comprise a connection status of the building automation device 5 or firmware information, and alert status. Another example of virtual content 7 is wiring information, that is overlayed with the visual information 12 in order to indicate to the operator how to connect the building automation device 5. This reduces the risk for errors when connecting the building automation device 5.

Instead of storing the database 56 and/or the application 57 in the data memory 21 of the mobile device 1, in a variant, the database 56 is stored in a server system 70 as illustrated in FIG 2. Of course, the database 56 and/or the application 57 can also be distributed in the server system and the mobile device 1.

The embodiment disclosed in FIG. 1 and FIG. 2 also illustrates engineering/commissioning a controller 5 by a mobile device 1a (typically smartphone or tablet but could also be more specialized hardware like augmented reality headsets). According to an embodiment, the user is immediately able to view device specific information (warnings, errors, connections, software version, ...) and interact with it. He does NOT need to find the controller 5 beforehand in a (possibly long) list of controllers. Connecting to the controller 5 can automatically be attempted upon its recognition. This also strengthens accessibility of the engineering/commissioning process and could ease it, consecutively increasing efficiency and reducing costs.

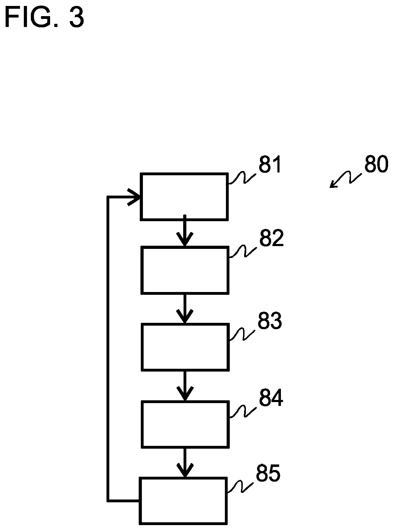

FIG. 3 shows a flow diagram for a method 80 for supporting commissioning and/or maintenance of a building automation system 100 and/or a building automation device 5 according to an embodiment of the invention. The method can be implemented by an assistance system 1 as disclosed in FIGs. 1 and 2.

The handheld assistance system 1 is positioned and moved around in a real-world infrastructure environment 3 such that the camera system 4 captures the real-world infrastructure environment 3 and generates a video stream. The video stream is analyzed by the data processing system 20.

Method step 81 represents the step of receiving real-time data 2 about the real-world infrastructure environment 3 by capturing of the building automation device 5 by the camera system 4. In method step 82 the data processing system 20 analyzes the video stream and identifies and localizes the code 6 within the real-world infrastructure environment 3.

In method step 83 the data processing system 20 generates the virtual content 7 based on the identified code 6. The virtual content 7 comprises support information for commissioning and/or maintaining the building automation device 5.

In method step 84 the position and the orientation of the building automation device in the received real-time data is tracked by tracking the position and the orientation of the code 6.

In method step 85 in addition to the captured video stream the virtual content 7 is presented on the display device 8 to an operator. Method step 85 comprises the method step of integrating the virtual content 7 with the video stream 2 based on the tracked position 9 of the building automation device 5 to create an augmented reality experience 11. In an embodiment, this way a static picture with an augmented reality experience is created by overlaying a frame of the video stream 2 with the virtual content 7. In a more sophisticated embodiment, method steps 81-85 are iteratively repeated for a sequence of video frames in order to create an augmented video reality experience 11.

In addition to the code 6, other known characteristics of the building automation device 5 can be recognized in the received real-time data and used for identifying the code 6 and/or the position and orientation of the building automation device 5 in order to integrate the virtual content 7 into the real-time data 2.

Based on a known position 9 of the code 6 and/or based on at least one other known characteristic of the building automation device 5 it is determined where to place the virtual content 7 with the real-time data 2 about the real-world infrastructure environment 3.

According to further embodiments, support information comprises additional information related to a building automation system 100 comprising said building automation device 5. For example, such information can be collected from the building automation device 5 itself or from the building automation system 100. For example, the additional information can comprise a status or current configuration of the building automation device 5 or the building automation system 100.

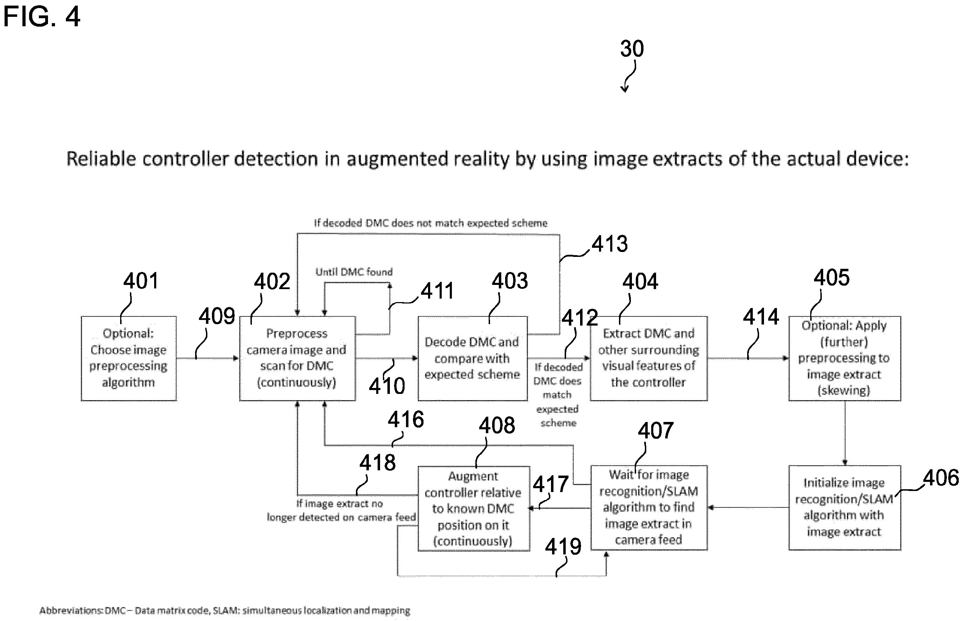

FIG. 4 shows a method 30 for reliable building automation device detection in augmented reality by using image extracts of a building automation device 5.

In method 30 which can be a more detailed implementation of method 80, images are captured as part of the video stream 2. In step 401 an image preprocessing algorithm is chosen. The method then proceeds 409 to method step 402 where camera images are preprocessed and scanned for a DMC in a continuous manner, which is represented by loop 411, until a DMC is found in at least one of the images of the video stream 2. The method 30 then proceeds 410 to method step 403 according to which the DMC is decoded and compared with an expected scheme in the database 56. If the DMC does not match any expected scheme, the method 30 returns 413 back to method step 402. If the decoded DMC does match an expected scheme which is represented by the arrow 412, in a method step 404 the DMC and other surrounding visual features of the controller 5 are extracted. As represented by arrow 414, the method 30 can then continue by applying further preprocessing of the extracted image, e.g. in order to compensate the skewing of the image due skewed perspective of the camera system 4. In a further method step 406 image recognition is initialized, e.g. by applying a simultaneous localization and mapping (SLAM) am algorithm to the image extract. In a method step 407 the method 30 then waits for the image recognition and/or the SLAM algorithm to find the image extract in the camera feed 2. In case the image extract and/or the DMC cannot be recognized in the video stream 2, the method 30 returns 416 to method step 402 to reiterate preprocessing of the video stream 2 for a DMC, which can be the same or a different DMC. In case the image extract could be found in the camera feed 2, the method 30 continues 417 to method step 408 to generate virtual content 7 based on the identified DMC 6, said virtual content 7 comprising support information 13, 71 for commissioning and/or maintaining the building automation device 5. Method steps 407 and 408 are iteratively repeated which is represented by arrow 419 until the image extract can no longer be detected on the camera feed 2, in which case the method 30 returns 418 to method step 402 to reiterate preprocessing of the video stream 2 for a DMC, which can be the same or a different DMC.

According to an embodiment, building automation devices 5 that already comprise a code such as a DMC or a QR-code on them, which can be recognized. Based on the known position of the data matrix code on the device 5, a part of the camera image 2 used to detect the data matrix code 6 can be extracted. This image extract will contain the data matrix code 6 on the controller 5 and possibly includes other known visual features of the controller 5 to increase detection performance. According to an embodiment, no previously existing images of the controller 5 or parts of the controller 5 are being used, but instead the image extract of the actual controller 5 in front of the user. According to an embodiment, specific lighting conditions and possible visual modifications made to the controller can be overcome when generating the augmented reality experience, which is not the case or at least much more difficult to obtain when static images of the device 5 are used instead. It is also possible to apply image preprocessing to both stages of data matrix code detection and image extract recognition to further enhance results.

According to an embodiment, more reliable visual detection of building automation devices 5 such as controllers are enabled, consequently allowing to commission and/or engineer them via augmented reality. This reduces the time needed for both, engineering itself (no need to find the matching building automation device 5 in a possibly long list of building automation device is necessary, from the user perspective, only the camera 4 needs to be pointed at the device) and time needed for training (since a more intuitive process is enabled). A further embodiment comprises on a process level the introduction of augmented reality technology and the integration of helper functions 13 within the mobile application 57. According to an embodiment, improvements are made for building automation device detection, allowing to use augmented reality technology more reliably. According to an embodiment, image extracts of the actual device 5 are used (further improved by the possible image preprocessing) in comparison to pre-made images or three-dimensional models of the already existing detection methods of objects in augmented reality.

For a commissioning and/or maintenance process, the advantages of this invention over the prior art can include:
- Enhanced Efficiency: The real-time information and helper functions provided in the augmented reality view streamline the commissioning process, reducing time and effort required by commissioning engineers.
- Improved Accuracy: By eliminating the need for manual reference to documentation and separate diagnostic tools, the likelihood of human errors and wiring mistakes can be reduced during the commissioning process.
- Simplified Troubleshooting: The augmented reality view overlays critical information onto a building automation device that is depicted on the screen as part of the video stream 2, allowing commissioning engineers to quickly identify and address issues, thereby minimizing downtime and improving overall system performance.
- Accessibility: The user-friendly interface of the mobile application makes it easily accessible to commissioning engineers, enabling them to access details of the detected building automation device and helper functions conveniently from their mobile devices.

The building automation device detection works as following: All respective building automation devices have a data matrix code on them. Not only is the position of the data matrix code or other code on the building automation device known for each model, but also a scheme of their content to which all data matrix codes adhere to.

To detect a building automation device, the camera feed can be searched for the data matrix code. If found, the data matrix code is extracted from the camera image. Because it is known that the code is in the shape of a square or other predefined shape, it may also slightly be skewed to account for the camera perspective (in case the camera is not placed facing exactly upright to it; to improve later detection performance). The part containing the data matrix code extracted from the camera image may also include other known characteristics from the building automation device placed next to the data matrix code, e.g., a company logo.

According to an embodiment, the extracted and possibly processed image or video stream cutout is afterwards used as kind of marker to serve as input for an augmented reality framework (or custom-built image detection or simultaneous-localization-and-mapping mechanism) to continuously redetect the building automation device 5 in the camera feed 2 when the smartphone 1 changes its position.

Based on the known position of the data matrix code 6 on the building automation device 5, it can be calculated where augmentations (e.g., displaying the building automation device's name, status information, symbols/colors for connected modules, ...) are to be placed within the camera feed 2 to create the optical impression of a virtual augmentation to the real-world building automation device 5.

Some embodiments of the invention involve benefits over the prior art or other potential solutions such as increased reliability. Further advantages include:
- The cutout image of the building automation device matches the actual environment (especially in terms of lighting) of the smartphone user, whereas static images of both the building automation device or parts of it would have been taken under different lighting conditions and result in a lower detection performance.
- As the data matrix code is different for each single device, the actual image is closer to the actual data matrix code on the device, than any generic lookalike on a static photo would be.
- Because the scheme of the data matrix code's content is known (and after initial detection of a device even the exact content), the images from the camera feed can be heavily processed (e.g., sharpening, increase contrast, noise reduction, ...) to drastically increase the (re-) detection rate of the data matrix codes. This applies to both, initial detection and re-detection when augmenting the camera feed. Usually, such heavy processing could cause false positives, where data matrix codes are read that do not actually exist - but these can be detected by comparison to the expected scheme (or previously read content) of the data matrix codes. The most adequate image processing methods may also be chosen depending on an analysis of the camera image; possibly taking different scenarios (e.g., dark/bright surroundings or good/bad camera image quality) into account.
- Using the image extract of the actual building automation device in front of the user factors in possible visual modifications (like custom lettering) of it, which could further degrade the results possible with static reference imagery.
- There is no need to have a huge (images for different controller or other building automation device models with each different perspectives and different lighting conditions resulting in a high count of images) image database for device recognition, which would either occupy a high amount of storage on the smartphone or require a (fast) internet connection.
- There is no need to have a three-dimensional model for each different controller or other building automation device, and no special hardware requirements on the assistance system 1, 1a detecting it (like for example a LIDAR or at least separate camera) to reliability detect the building automation device (as a single camera usually does not provide sufficient detection performance).

- There is no need to have any modifications to the controller surface to include any form of marker (respectively no need to attach any marker to the controller case).
- There is no need to have any wireless connectivity on the controller which otherwise could be used to receive data about is position - hence the algorithm can also be used in scenarios, where the controller for example is not powered on (or has an issue affecting its wireless connectivity).
- The algorithm enables the identification and continuous detection even of multiple instances of the same building automation device 5 in the camera feed at the same time.
- The algorithm enables an easy recovery-path in case the building automation device 5 is no longer being detected (e.g. due to changed lighting conditions or moved assistance system 1, 1a): If the building automation device 5 is no longer present on the camera feed, the scan for a data matrix code is again being started (when the building automation device 5 is detected again, according to embodiments the real-time data 2 is automatically analyzed for finding out if is the same building automation device 5 again or an equally looking one. This is possible when the content of the data matrix code varies for each building automation device 5.
- According to an embodiment, there is a data matrix code on more than one or on all sides of the building automation device 5. This allows for recognizing the building automation device 5 from different sides. If these data matrix codes slightly differ (containing an information about its position, for example a suffix "1" for the data matrix on the top, a "2" for the bottom and so on), the assistance system 1, 1a can also be made aware of the actual side of the building automation device 5 its facing (which allows to more easily place the correct augmentations in the camera image.
- According to an embodiment, the method comprises using other visual information gathering about the building automation device 5, for instance camera-based analysis of status LEDs (serving at the same time as additional visual reference for building automation device 5 detection).

According to further embodiments, the aforementioned image preprocessing can be used to further improve detection results:
- Image preprocessing is especially useful in the context of the detection and decoding of the data matrix code.
- Using the known data matrix code's content scheme to prevent false-reads caused by aggressive image preprocessing is rather specific to the controllers, but more defensive image preprocessing will be fine to use in most other cases as well.
- Whether the image detection/simultaneous-localization- and-mapping mechanism (after the initial data matrix code recognition/decoding) is also using a preprocessed version of the camera feed (or the unprocessed raw input) may depend on the need to do so, the ability of this mechanism to process any other than raw camera input and the device's hardware capabilities (needs computational power for real-time image manipulation). The approach of using the data matrix code in addition with further visual reference anyway allows to do so.
- If the image detection/simultaneous-localization-and- mapping mechanism uses preprocessed camera input, the reference image extract it is initialized with is also preprocessed imagery, else unprocessed.
- To the user preferably only the unprocessed camera feed is visible.

According to an embodiment, a human operator is supported in the commissioning and/or maintenance of a building automation controller or other building automation device by introducing an augmented reality (AR) view for the controllers through a mobile application. By utilizing the mobile device's camera and scanning DMC codes on the controllers, support information 71, 13 is rendered in real-time in an AR view, providing commissioning engineers with immediate access to critical details about the controllers 5.

Further embodiments comprise the following features:
- DMC Code Scanning: The application scans DMC codes on the controllers using the mobile device's 1a camera 4 to retrieve relevant information.
- Augmented Reality View: The application overlays the support information 71, 13 in real-time onto the user's field of view, providing an intuitive and immediate visual representation of the controller's functionalities.
- Helper Functions: The AR view incorporates helper functions 13 such as wiring error detection and programmable logic controller (PLC) port status, enabling commissioning engineers to quickly identify and resolve issues during the commissioning process.

Further embodiments increase the robustness of augmented reality in terms of being able to detect the controllers 5 or other building automation devices to engineer/commission drastically more reliably.

According to an embodiment, the application 57 uses augmented reality and interacts with other objects.

According to an embodiment, the application 57 at the same time requires data matrix codes (or similar codes) on these objects to identify these objects.

According to an embodiment, the application 57 does not require the building automation device 5 to be powered and/or connected.

According to an embodiment, no augmentations are shown on the display 8 if a detected code is strikingly different from an expected data matrix code on the building automation device (in a way that it is safe to say, that the data matrix code does not match any expected pattern).

According to an embodiment, the method works under different lighting conditions.

According to an embodiment, the application 57 places virtual augmentations of the camera image offset, if the building automation device 5 is manipulated in a way that the data matrix code on it is on a different position than it would be expected to be.

It should be understood that the foregoing relates only to certain embodiments of the invention and that numerous changes may be made therein without departing the scope of the invention as defined by the following claims. It should also be understood that the invention is not restricted to the illustrated embodiments and that various modifications can be made within the scope of the following claims.

## Claims

1. A method for supporting commissioning and/or maintenance of a building automation system (100) and/or a building automation device (5), the method comprising the steps of:
a) receiving (81) real-time data (2) about a real-world infrastructure environment (3) from a sensor arrangement (4), said real-world infrastructure environment (3) comprising at least one building automation device (5) arranged in an infrastructure, wherein said building automation device (5) comprises a code (6);
b) analyzing (82) the real-time data (2) to identify and localize said code (6) within the real-world infrastructure environment (3);
c) generating (83) virtual content (7) based on the identified code (6), said virtual content (7) comprising support information (71) for commissioning and/or maintaining the building automation device (5);
d) presenting (84) the virtual content (7) to an operator.

2. The method according to claim 1, further comprising the steps of:
e) tracking the position (9) and/or the orientation of the building automation device in the received real-time data;
f) integrating the virtual content (7) with the real-time data (2) based on the tracked position (9) of the building automation device (5);
g) presenting the integrated virtual content (7) on a display device (8) to create an augmented reality experience (11).

3. The method according to claim 1 or 2, comprising the step of:
h) receiving user inputs to interact with the virtual content (7) and/or to control the augmented reality experience (11).

4. The method according to one of the preceding claims, further comprising the step of:
k) continuously updating the virtual content (7) and the augmented reality experience (11) based on changes in the real-world infrastructure environment (3) and user inputs.

5. The method according to one of the preceding claims, wherein the real-time data (2) comprises visual information (12) of the real-world infrastructure environment (3), and wherein the sensor arrangement (4) comprises a camera system for generating said visual information (12).

6. The method according to one of the preceding claims, wherein the code (6) is an optically readable code (6) arranged on a surface of the building automation device (5), and wherein the code (6) is preferably detected within the visual information (12).

7. The method according to one of the preceding claims, wherein the code (6) is positioned (9) on a predetermined position (9) on or relative to the building automation device (5), and wherein that predetermined position (9) is used for generating and/or presenting the virtual content (7).

8. The method according to one of the preceding claims, wherein at least one other known characteristics of the building automation device (5) is recognized in the received real-time data and used for identifying the code (6).

9. The method according to one of the preceding claims, wherein based on a known position (9) of the code (6) and/or based on at least one other known characteristic of the building automation device (5) it is determined where to place the virtual content (7) with the real-time data (2) about the real-world infrastructure environment (3).

10. The method according to one of the preceding claims, wherein receiving real-time data (2) about a real-world infrastructure environment (3) and presenting the virtual content (7) to an operator is carried out by a mobile device (1) .

11. The method according to one of the preceding claims, wherein helper functions (13) are incorporated into the virtual content (7).

12. The method according to one of the preceding claims, wherein the support information (71) comprises additional information related to a building automation system (100) comprising said building automation device (5).

13. The method according to one of the preceding claims, comprising preprocessing the real-time data, e.g. in order to compensate the skewing of the code (6) or improve recognition in difficult lighting conditions.

14. An assistance system (1, 1a) for supporting commissioning and/or maintenance of a building automation device (5) comprising means for carrying out the method of one of the preceding claims.

15. An assistance system (1, 1a) for supporting commissioning and/or maintenance of a building automation system (100) and/or a building automation device (5);
wherein the assistance system (1, 1a) comprises a data processing system (20), a sensor arrangement (4), and a display device (8);
wherein the sensor arrangement (4) is configured for generating real-time data (2) about a real-world infrastructure environment (3);
wherein the data processing system (20) is configured for getting said real-time data (2) analyzed to identify and localize a code (6) associated with a building automation device (5) within the real-world infrastructure environment (3), and for visualizing onto the display device (8) virtual content (7) based on the identified code (6), said virtual content (7) comprising support information (71) for commissioning and/or maintaining the building automation device (5).

16. An assistance system (1, 1a) according to claim 15, wherein the data processing system (20) is configured for tracking the position (9) of the building automation device in the received real-time data, and for integrating the virtual content (7) with the real-time data (2) about the real-world infrastructure environment (3) based on the tracked position (9) of the building automation device, and for causing the display device (8) to present the integrated virtual content (7) on the display device (8) to create an augmented reality experience (11).
